Europäisches Patentamt

**European Patent Office**

Office européen des brevets

(19)

(11) Publication number: **0 398 973 B1**

# (12) EUROPEAN PATENT SPECIFICATION

(45) Date of publication of patent specification :
**12.10.94 Bulletin 94/41**

(51) Int. Cl.$^5$: **H04B 1/66**

(21) Application number : **89902408.7**

(22) Date of filing : **10.02.89**

(86) International application number :
**PCT/GB89/00132**

(87) International publication number :
**WO 89/07866 24.08.89 Gazette 89/20**

(54) **METHOD AND APPARATUS FOR ELECTRICAL SIGNAL CODING.**

(30) Priority : **13.02.88 GB 8803390**

(43) Date of publication of application :
**28.11.90 Bulletin 90/48**

(45) Publication of the grant of the patent :
**12.10.94 Bulletin 94/41**

(84) Designated Contracting States :
**AT BE CH DE FR GB IT LI LU NL SE**

(56) References cited :
**IEEE International Conference on Acoustics, Speech and Signal Processing, vol. 3, 3,4,5 May 1982 (New York, US), pages 1688-1691; V. Gupta et al.: "Performance evaluation of adaptive quantizers for a 16-Kbit/s sub-band coder"**
**IEEE International Conference on Acoustics, Speech and Signal Processing, vol. 4, 26-29 March 1985, (New York, US), pages 1672-1675; F.K. Soong et al.: "Subband coding of speech using backward adaptive prediction and bit allocation"**

(56) References cited :
**IEEE International Conference on Communications '84, "Links for the Future, Science, Systems & Services for Communications", vol. 3, 14-17 May 1984, Amsterdam (NL), (New York, US), pages 1163-1168; R.L. Zinser et al.: "A robust 9.6 Kb/s subband coder design for the Rayleigh fading channel"**
**Funkschau, vol. 59, no. 13, 19 June 1987, (Munich, DE), pages 44-48; G. Theile et al.: "Verdeckungseffekte"**

(73) Proprietor : **AUDIO PROCESSING TECHNOLOGY LIMITED**
**10 Malone Road**
**Belfast BY8 5BN, Northern Ireland (GB)**

(72) Inventor : **SMYTH, Stephen Malcolm Frederick**
**4 Berkley Square**
**Bangor BY19 2YY (GB)**

(74) Representative : **Downey, William Gerrard et al**
**Wilson, Gunn, M'Caw & Co.,**
**41-51 Royal Exchange,**
**Cross Street**
**Manchester M2 7BD (GB)**

## Description

The present invention relates to a method of and apparatus for electrical signal coding.

The rapid evolution of the Integrated Service Digital Network (ISDN) has prompted a growing interest in the efficient transmission of high quality music signals. However in contrast to advances made in the field of low-bit rate speech coding, existing real-time music coding schemes, such as digital companding and delta modulation, barely attain bit rates below 400 kbit/s, and are thus incompatible with the 128 kbit/s ISDN capacity standard. These systems, unlike their speech counterparts, exploit little if any of the natural redundancies associated with the sound signals of interest. This situation has remained - due partly to the higher sampling overheads involved, the absence, until recently, of high speed digital signal processing hardware and the widely held view that high quality music signals simply could not be transmitted with low bit rates.

This view is reflected in the following documents:-

IEEE International Conference on Acoustics, Speech and Signal Processing, vol. 3, 3-5 May 1982, New York, US, V. Gupta et al.:

"Performance evaluation of adaptive quantizers for a 16 kbit/s sub-band coder", pages 1688-1691

IEEE International Conference on Acoustics, Speech and Signal Processing, vol. 3, 26-29 March, 1985, New York, US, F.K. Soong et al.:

"Subband coding of Speech using backward adaptive prediction and bit allocation", pages 1672-1675

These documents refer throughout to speech coders which means a frequency range of at the most 0 - 8 kHz. There is no reference to audio range signals.

According to one aspect of the present invention there is provided a method of electrical signal coding comprising the steps of sampling the signal at repeated intervals, filtering each sample into at least two frequency sub-bands, coding the signal in each band by means of a linear prediction technique and quantizing each sub-band with a varying number of levels according to its signal variance, characterized in that the signal frequency range is 0-24KHz and in that the energy in past inverse quantized samples is used to adjust the range for the next sample both at a receiver and a transmitter.

According to another aspect of the present invention, there is provided apparatus for the coding of an electrical signal comprising means for sampling (QMF) the signal at repeated intervals, means for splitting (QMF) the signal into at least two frequency sub-bands, means for coding (QMF, I/Q, P) the signal in each band by means of a linear prediction technique and quantizing each sub-band with a varying number of levels according to its signal variance, characterised in that the apparatus is capable of coding over the signal frequency range 0-24KHz and in that the energy in past inverse quantized samples is used to adjust the range for the next sample both at a receiver and a transmitter.

It is well known that the conventional music coding techniques such as companded pulse code modulation (PCM) and Adaptive Delta Modulation (ADM) are particularly prone to noise modulation in the presence of monophonic type signals. This problem is related to the poor masking properties of these signals and the fact that quantization is singularly performed on the entire spectra. The degree of noise modulation (or noise breathing) is generally accepted to be the ultimate limiting factor in the performance of these coders, leading to usable data rates of the order of 400 kbit/s. Since sub-band ADPCM music coding bears some similarity to companding and delta modulation schemes, by the virtue of quantizing in the time domain, it is reasonable to assume that noise modulation effects are likely to predominate in sub-band ADPCM at low data rates. However, since other fundamental differences exist between the techniques, in practice the effects of noise and distortion in sub-band ADPCM are substantially lower. This fact leads to a considerable coding gain over PCM based systems and the provision therefore to reduce the bit rate for comparable performances. The main coding mechanisms involved in sub-band ADPCM, and the perceptual advantages related to the underlying characteristics of music signals are as follows:-

1) With the sub-band coding approach the music is split into several frequency bands prior to quantization. Modulated quantization noise (which is inherent with adaptive PCM) developed at the coding stages is therefore constrained to each band and cannot interfere with signals in any other band. The advantage of this is that noise masking by the dominant inband signal is much more effective due to the reduction in the noise bandwidth. With the music spectrum located in several independent bands, the opportunity arises to exploit the vast spectral redundancy which occurs in music signals by quantizing each band with a varying number of levels, according to its signal variance. This technique normally results in a direct objective gain over PCM, becoming more advantageous as the signal spectrum becomes discontinuous and/or resonant - a very common situation in music.

2) The appropriateness of linear prediction techniques for the coding of speech signals has in the past been well documented. The inventors studies have shown that theoretical short term prediction gains for wideband musical sounds can, in some instances, rise as high as 50 dB. This implies that as many as 8 bits

2

in a predictive coder can be dispensed with to produce noise levels comparable to PCM. One particular advantage of linear prediction is that its efficiency rises with signal periodicity, or spectal purity, and therefore possesses the ability to directly attenuate, prior to quantization, those signals which normally promote audible noise modulation.

3) Backward adaptive quantization has some similarities with instantaneous digital companding, except that the quantizer input range adjusts according to the size of past output samples, providing an optimal quantizer match over a wide music dynamic range. Moreover, since the signal to noise ratio (SRN) is in effect fixed, background noise under idle conditions is inaudible. The backward adaptation approach avoids the need to transmit gain information, unlike block companding, and is inherently more robust to transmission errors.

In order that the invention may be more clearly understood, an embodiment thereof will now be described, by way of exmaple, with reference to the accompanying drawing, in which:-

Figure 1 shows a 2-bit pulse code modulation quantizer characteristic,

Figure 2 shows an adaptive pulse code modulation characteristic,

Figure 3 diagrammatically illustrates a backward adaptive pulse code modulation system,

Figure 4 diagrammatically illustrates a differential pulse code modulation system,

Figure 5 shows a comparison of a pulse code modulation system and a differential pulse code modulation system,

Figure 6 shows a sound signal spectrum,

Figure 7 shows the spectrum of Figure 6 coded with 4 bit pulse code modulation,

Figure 8 shows the spectrum of Figure 6 split into two sub-bands,

Figure 9 shows the spectrum of Figure 8 coded using 4 bit pulse code modulation in each sub-band,

Figure 10 shows the spectrum of Figure 8 coded using optimal 6:2 bit allocation in the respective sub-bands,

Figure 11 shows adaptive bit allocation in accordance with sub-band energy, and

Figure 12a shows a diagram of a 2-band sub-band ADPCM music coder,

Figure 12b shows the 2-band 24-tap QMF tree structue for the coder of Figure 12a,

Figure 13a shows a diagram of a 4-band sub-band ADPCM music coder,

Figure 13b shows the 4-band 64-tap QMF tree structure for the coder of Figure 13a.

Figure 14 is a simplified block circuit diagram of one form of coding apparatus using a compact disc player,

Figure 15 represents sub-bands ADPCM encoding in the apparatus of Figure 14.

Figure 16 represents sub-band ADPCM decoding in the apparatus of Figure 14.

Figure 17 shows interfacing for parts of the apparatus of Figure 14.

Figure 18 shows more detail for the interfacing of Figure 17, and

Figure 19 shows a typical word format for the data transmission between parts of the apparatus of Figure 14.

Pulse Code Modulation (PCM) is a digital coding system which converts an analogue time waveform into a digital bit stream consisting of O's and l's. To do this, the analogue signal is first sampled, i.e. the voltage excursion of the signal is periodically measured, and each analogue sample converted into a binary number, usually in 2's complement. This binary number represents the size and polarity of the sample voltage. Each binary number is then transmitted or stored, instead of the original analogue signal. According to the Nyquist theorem, the analogue waveform must be sampled at a frequency at least twice that of the maximum signal deviation to avoid aliasing distortion. Assuming the sampling criterion is maintained, inaccuracy in a PCM system can only result through the binary representation of each sample voltage. For high quality digital audio, it is generally accepted that a binary word length of approximately 14 to 16 bits is required for this purpose. The audio signals with which we are concerned would normally lie in the range 0 - 24 KHz.

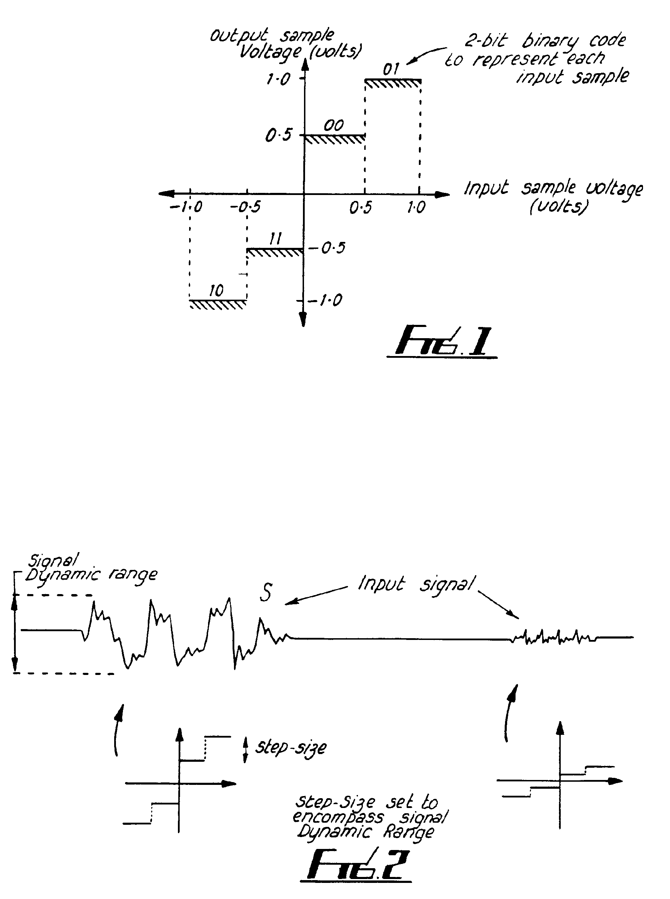

To illustrate the PCM process, figure 1 shows a 2 bit PCM quantizer characteristic. Using a 2 bit binary word for the sample coding, i.e. to represent the polarity and amplitude, results in a quantizer with only 4 levels. Figure 1 also assumes that the maximum input or sample voltage will not exceed +/-1 volt (i.e. the quantizer dynamic range is set to +/- 1 volt).

If a sample of +0.6 volts is applied to this 2 bit quantizer, for example, the sample will be represented by the PCM word 01, using the x-axis. The process of allocating discrete levels to an analogue voltage is known as quantization. When this word is transmitted to a receiving PCM system, the sample is reconstructed to +1.0 volt (using the y-axis). This process of reconstruction is known as inverese quantization.

Since the reconstructed samples can only have 4 discrete levels, PCM coding using only 2 bits introduces gross error, or distortion, with respective to the original signal. In the example the step-size of the quantizer of 0.5 volts. It follows that the maximum error which can be incurred by the PCM process is +/-0.25 volts, that is half the step-size, and therefore the maximum signal to error ratio (SNR) is 1.0/0.25 (or 12dB in the log domain).

A number of characeristics resulting from PCM coding may be summarized as follows:-

1) The Root Mean Square (RMS) of the error is independent of the input signal amplitude, that is the step-size and therefore the average error is fixed. It is paramount therefore that the quantizer dynamic range is scaled such that it encompasses the likely signal excursion range, to maintain as high a SNR as possible.

2) For a reasonably fine quantizer characteristics the PCM sample error is perceived as random noise of constant average amplitude. The frequency content of this noise therefore extends from d.c. to half the sampling frequency.

3) Since the maximum error amplitude is half of the step-size, doubling the number of levels while maintaining the same quantizer range, will halve the error with respect to each sample. In a dB scale this reduction in the error voltage represents a 6dB gain in the SNR for every additional bit added to the PCM word length. For example, a 16 bit quantizer can maintain SNR figures in the region of 96dB for full scale input samples (that is 16X6dB). A 15 bit PCM system will atain figures in the range of 90dB etc.

Standard PCM, as described above, exhibits 2 fundamental operational disdvantages.

1) the input signal must not exceed the quantizer range, that is the sample amplitude should not be greater than the last quantizer step (figure 1). If this happens, the error voltage is no longer constrained to half the step-size. Even with the finest quantization this will produce enormous distortion.

2) The input signal should not become so small that the quantizer noise voltage becomes comparable. The SNR of a fixer range quantizer is at its lowest for very small input samples.

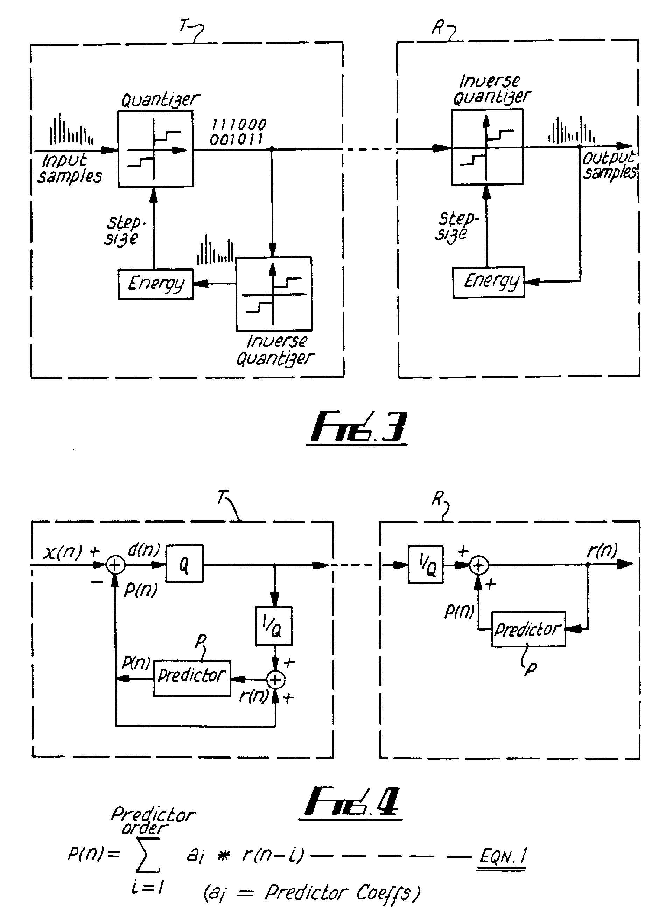

In practice, to avoid (1) and (2), the quantizer step-size is made very fine by using a large binary word length, and the dynamic range of the levels set to twice that expected of the input signal (that is only the bottom half of the steps is used). However, if the quantizer range is allowed to adapt according to the energy of the input, the use of very long PCM words may be avoided. Music signals have been successfully coded with adaptive PCM schemes using word lengths around 10 to 12 bits per sample. Adaptive PCM is also known as Digital companding, where, in this system is the dynamic range of the input signal that is modified rather than the quantizer. Such a system is illustrated in Figure 2.

If the quantizer range now matches that of the signal at all times, the ratio of the signal voltage with respect to the noise voltage is constant. In other words the noise level is directly proportional to the signal level, unlike PCM. The actual noise level with respect to the signal is simply determined by the number of levels in the quantizer. If the quantizer range is adjusted at the transmitter to match the incoming sample amplitudes, likewise the range of the inverse quantizer must also be adjusted for correct operation. This may be achieved in two ways:

1) Block adaptation

With this process a block of incoming samples is delayed at the receiver and the RMS energy of the block calculated. This energy value is then used to scale the quantizer prior to quantizing the block of samples. The energy sample is also transmitted to the receiver ahead of the resulting binary bit stream, in order to match the inverse quantizer range to that in the transmitter.

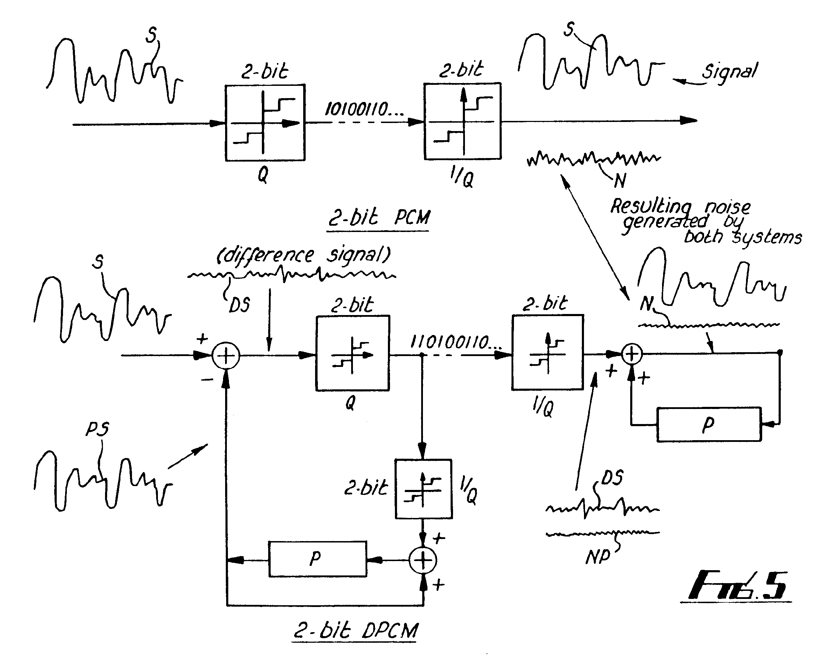

2) Backward Adaptive PCM, which is illustrated in Figure 3 is a system in which the energy is past inverse quantized samples is used to adjust the range for the next sample. Since each quantized sample bears information concerning the range adaptation for the next sample, no extra 'energy' information needs to be transmitted to the receiver.

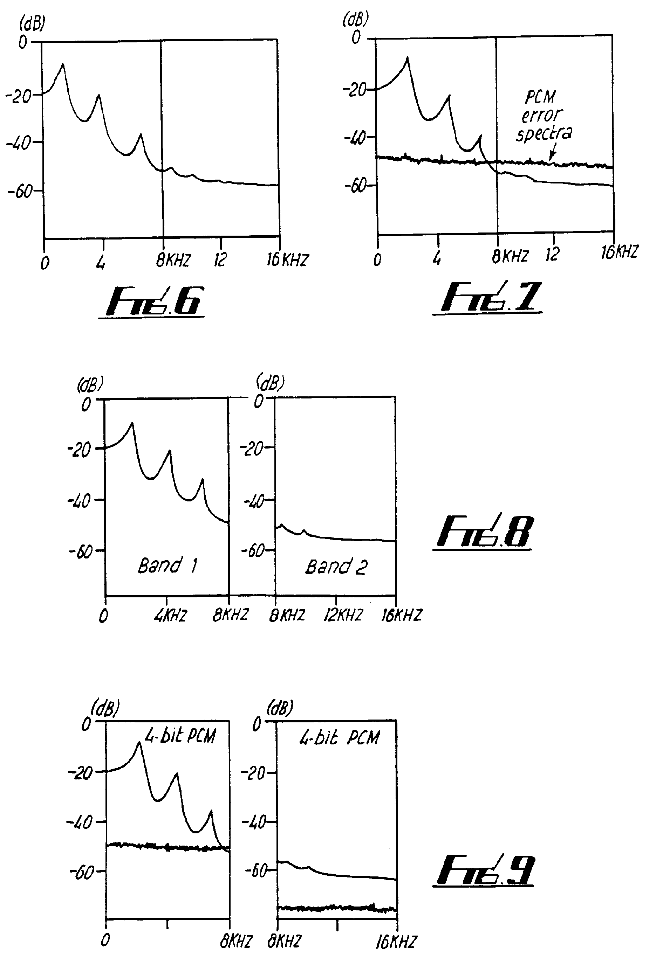

Differential Pulse Code Modulation (DPCM) is illustrated in Figure 4. DPCM is very similar to PCM except that it is the amplitude of the difference d(n) between the input sample x(n) and a predicted sample p(n) which is quantized. P(n) is produced by a predictor P which bases is prediction on previous reconstructed samples r(n), available at both the receiver R and transmitter T. Generally the predicted value is a linear combination of several past reconstructed samples, according to the equation:

Predictor

$$P(n) = \sum_{i=1}^{order} A_i * r(n - i)$$

$(A_i = \text{Predictor Coeffs})$

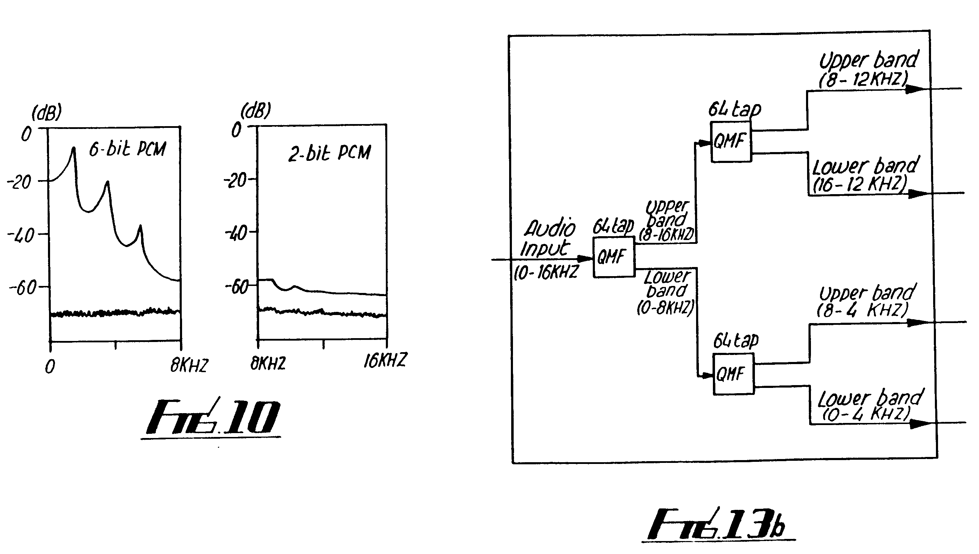

At the receiver, the prediction will always be identical and therefore the only difference between r(n) and x(n) is the quantization error incurred in quantizing the difference signal d(n). Because the intention of DPCM is to reduce the amplitude of the difference signal DS with respect to the input signal, the range of the quantizer will on average be smaller than that required to quantize the input, and therefore the error level is reduced on that found in PCM. DPCM becomes more efficient with respect to PCM as the predicted signal PS becomes close to the input samples. Because the prediction is based on previous samples, the coding gain exhibited by DPCM is a result of its ability to exploit signal redundancy in the time domain. The differences between PCM and DPCM are illustrated in Figure 5. DPCMs ability to reduce the noise level N may be measured in the log domain for perceptual reasons. For example, if the noise level NP in DPCM is halved, compared to PCM, for some signal S, we say the coding gain over PCM is 6dB. Because the dynamic range of the difference signal is very much smaller than that of the input signal, DPCM results in less quantization noise.

DPCM is useful only if it is capable of predicting the incoming signal. For fixed signal characteristics such as sinewaves, this is relatively easy, and SNR coding gains up to 60dB may be realized. However if the predictor has been optimized for any particular waveform, its performance will be sub-optimal for other types of signal. To sum up, if the input signal to DPCM systems is non-stationary, the linear combination within the predictor must adapt according to the signal statistics to maximize the coding code. In practice the predictor coefficients are calculated such that the means squared error between the predicted signal and the input is minimized. This calculation can be performed every sample using gradient or lattice adaptation techniques or on a block of input samples as with the autocorrelation and covariance methods.

By combining both LPC adaptation for the predictor and APCM for the quantizer within the basic DPCM system, what is known as an Adaptive Pulse Code Modulation (ADPCM) scheme is arrived at.

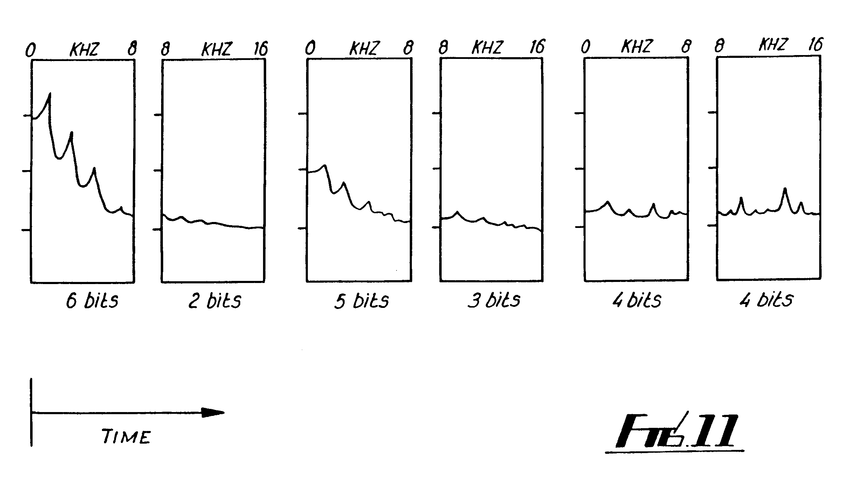

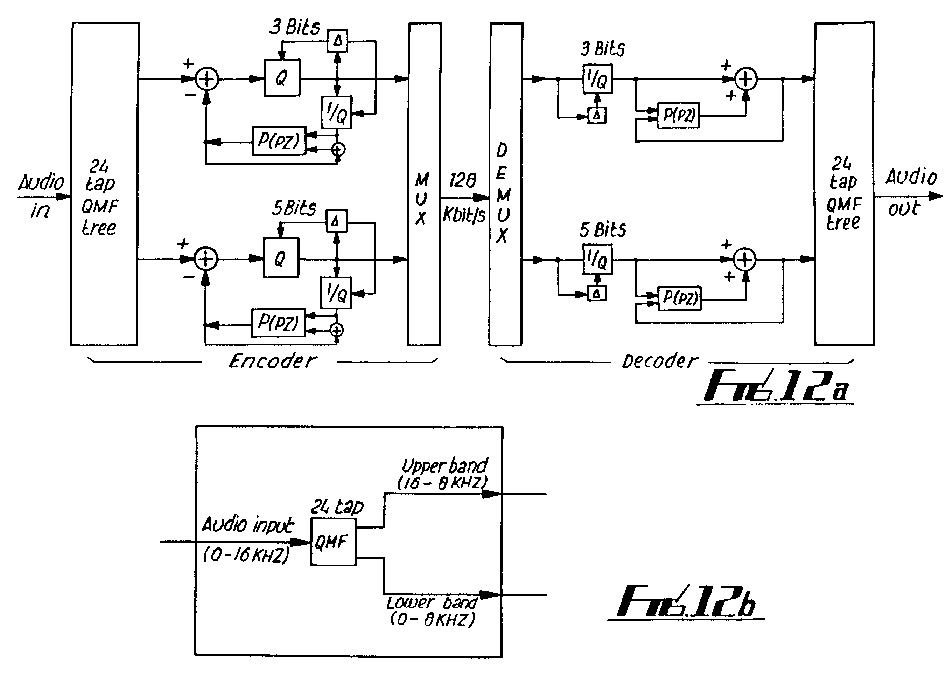

Looking at the short-term frequency spectrum of a typical audio sound we find that the spectral components are not evenly distributed across the spectrum. In practice most of the signal energy will be found in the lower half of the spectrum, most of the time, figure 6. However, it is known that the spectrum of the error voltage generated in the coding process (be it PCM, DPCM or ADPCM) exhibits a white noise spectrum, extending from dc to half the sampling frequency. For example, if the signal shown in Figure 6 is coding using a 4 bit PCM system, the noise energy level will lie approximately 24 dBs below the average signal level, see Figure 7. However on coding the spectrum the resulting noise level exceeds that of the signal for frequencies beyond 7kHz. Subjectively this coding error will be perceived as high frequency background hiss, since the main signal cannot 'mask' the error signal at high frequencies. The problem therefore with full-band PCM is that the noise level may be pushed up by high energy spectral resonances, to such an extent that it may 'drown out' distant spectral components of much lower amplitude, Figure 7.

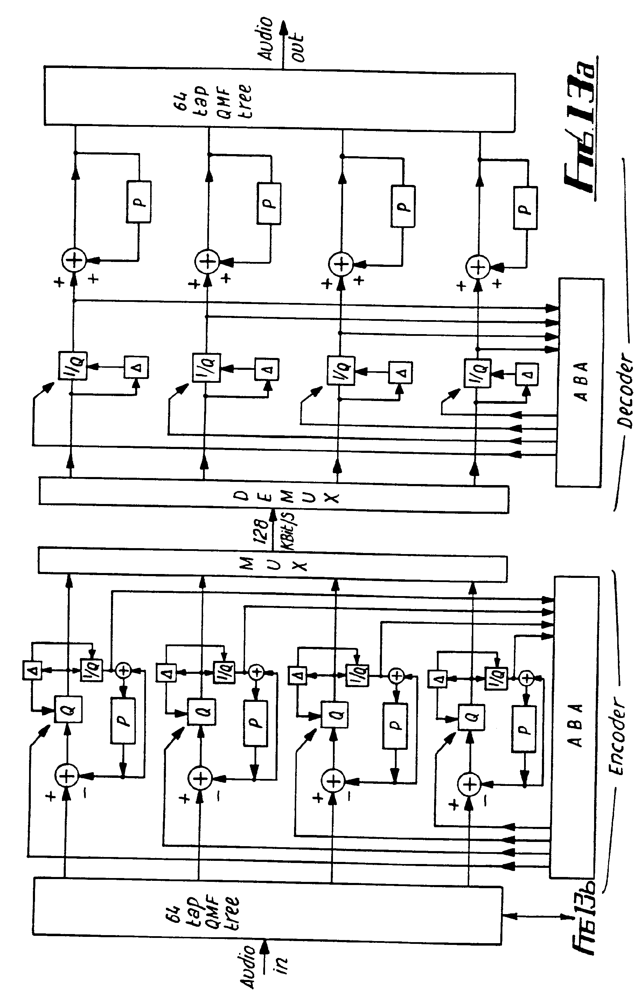

One way of decoupling error signals generated by different parts of the spectrum is to divide the spectrum up to several bands using sub-band coding filter banks, prior to quantization. If each band is then individually coded using say PCM,DPCM or ADPCM, the noise generated by each band cannot interfere with signals in other bands. Using the spectrum of Figure 6, if this is split into 2 equal bandwidth bands we obtain Figure 8. Each band, band 1 and band 2, now contains a signal of only 8 kHz bandwidth and therefore the sampling frequency within each band can be halved to 16kHz, rather than 32 kHz for the full-band signal.

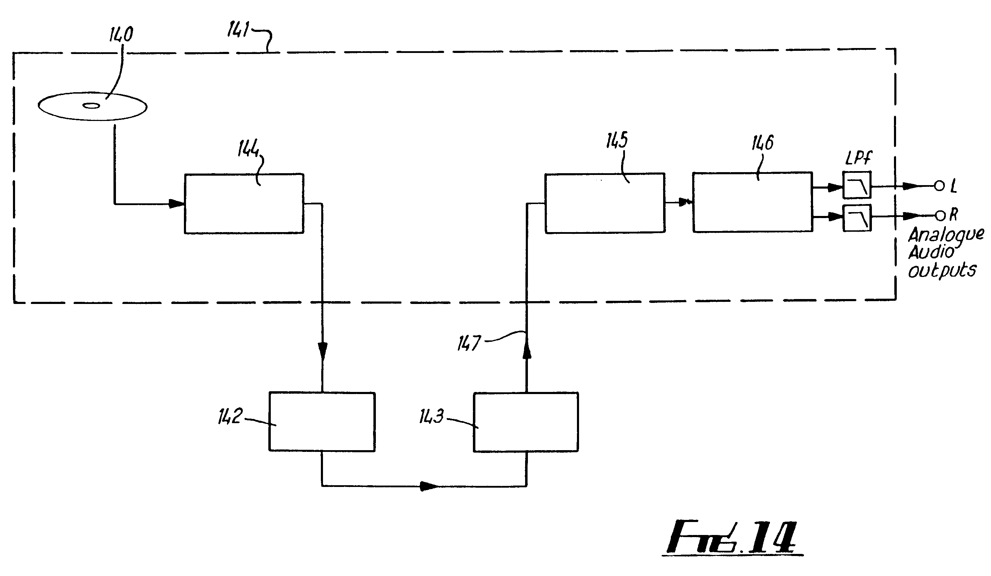

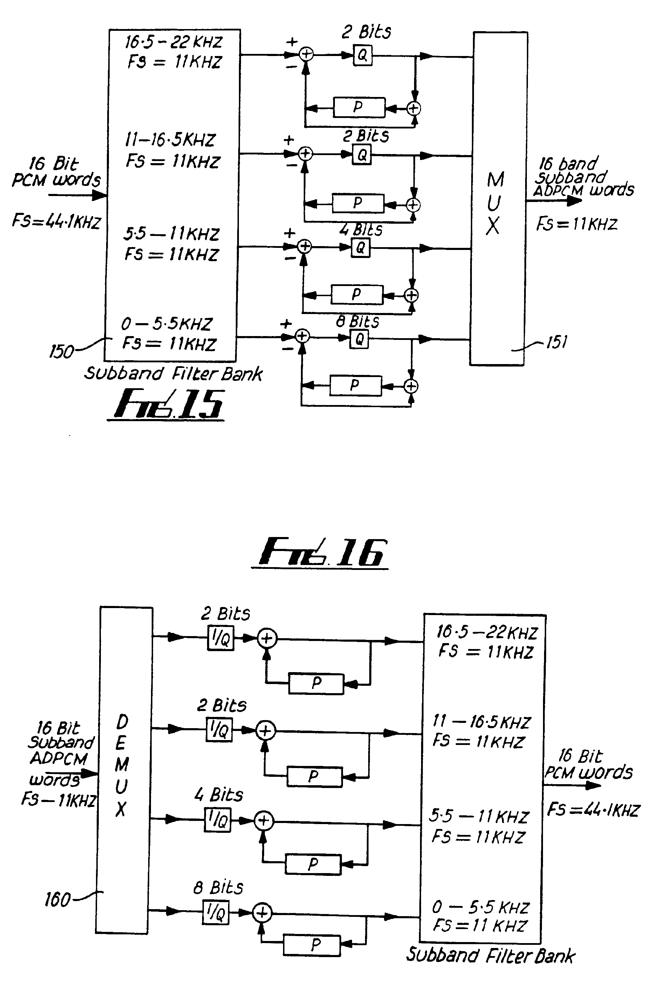

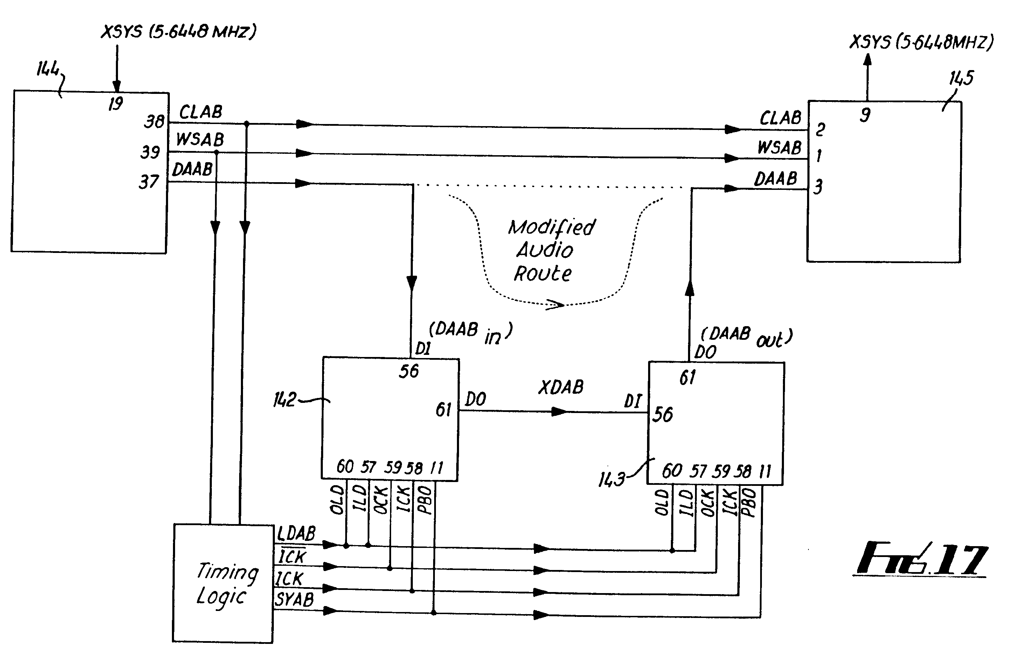

Coding each band individually with 4 bit quantizers results in Figure 9. In this case the noise in the lower band exceeds the signal only between 7 and 8kHz. However, since the noise level in the upper band is now unnecessarily low, a better allocation of quantizer might be that shown in Figure 10. The aim therefore of sub-band coding is to allow the bit distribution to match that of the signal variance within each band, and in doing so, maximizing the likelihood of noise masking. Obviously the spectrum pattern of figure 6 will change with time, implying that an even greater gain could be achieved by allowing the bit allocation to adapt to the short-term energy in each sub-band, figure 11. This process is known as Adaptive Bit Allocation in the frequency domain.

Because the bit allocation can approximate the energy contour of the signal spectrum, sub-band coding can therefore directly exploit the spectral redundancy associated with almost all signals, to achieve an improved coding gain over full-band coding techniques.

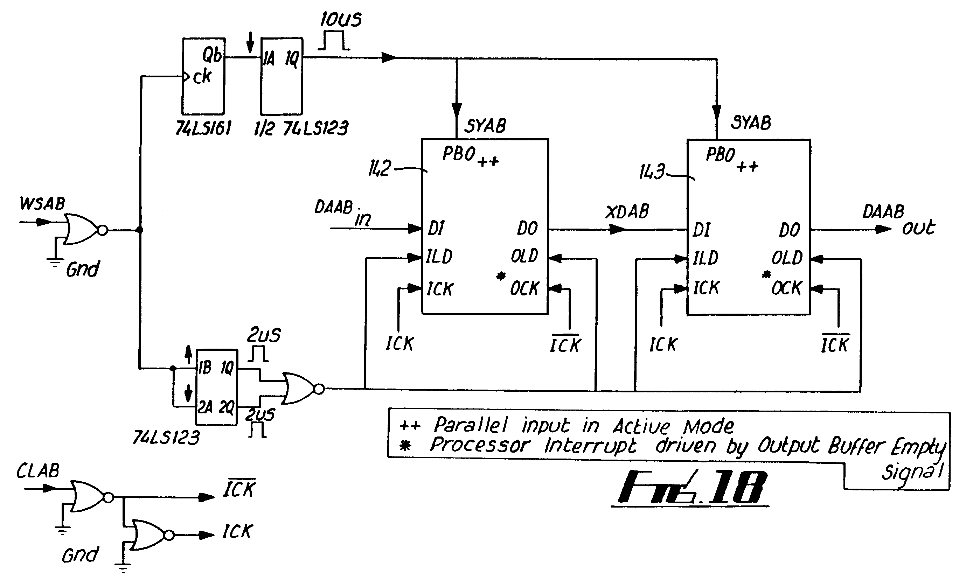

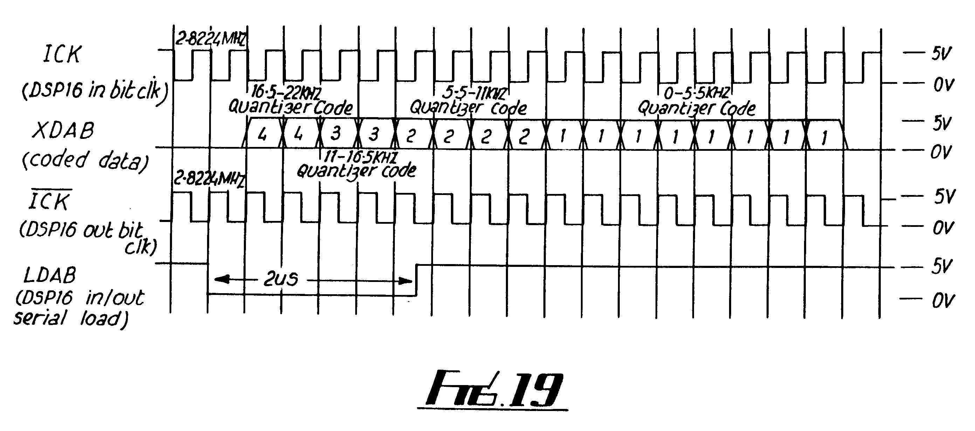

Referring to Figures 12a and 13a the main parts are referenced as follows:-

Q    Backward Adaptive Quantizer

I/Q    Inverse Backward Adaptive Quantizer Quantizer Step-Size Adaptor

P    All-Pole Backward Adaptive Predictor

ABA    Adaptive Bit Allocation

This music coder consists of a two band Quadrature Mirror Filter (QMF) filter bank incorporating backward adaptive prediction and quantization in each band. Initial work with this system was undertaken with a fixed bit allocation of 5:3 and either block adaptive or gradient adaptive LPC within in both upper and lower band predictors. The quantizers used are non-uniform Laplacian pdf backward adaptive. The two bands are divided and recombined using a 24 tap Quadrature Mirror Filter (QMF). 15kHz audio signals are sampled at 32 kHz and each 16 bit sample filtered into two frequency sub-bands, coded to 4 bits and transmitted to the receiver. Here the compressed samples are decoded, reconstructed and converted back to analogue. A similar scheme to that shown in Figure 12a and 12b is shown in Figures 13a and 13b. In these Figures the main parts are referenced as follows:

Q    Backward Adaptive Quantizer

I/Q    Inverse Backward Adaptive Quantizer

$P_{(PZ)}$    Pole-Zero Gradient Adaptive Predictor Quantizer Step-Size Adaptor

QMF    Quadrature Mirror Filter

In this arrangement, there are 4-sub-bands. The increase in the number of sub-bands increased the quality of the coded music still further as compared with the scheme of Figures 12a and 12b but at the cost of increased complexity. The coder uses a 4 band 64 tap QMF tree structure (0-4 4-8 8-12 12-16kHz) where each band incorporates an 8 pole backward block adaptive predictor (updated using the autocorrelation method) and a backward adaptive Laplacian quantizer. In this coder however, the bit allocation is allowed to adapt in a backward mode, according to the short term energy distribution of the error signal across the 4 bands. The liberal use of backward adaption in this coder also avoides the need to transmit SI. However the coding delay is now 192 samples, or 6.lmS and the overall complexity approximately four times that of the 2 band scheme.

The tree structures of Figures 12b and 13b show the splitting of the Input Audio signal for the front end of the encoder. To reconstruct the sub-bands at the decoder, the signal directions in the tree structure diagrams would be reversed and the final signal would be the AUDIO OUT.

Vitally important to the successful evaluation of any high quality coding scheme is the maintenance of signal fidelity throughout all the audio acquisition, coding and playback processes. This is important if delicate coding imperfections are to be reliably revealed and their effects assessed. All of the source material used in the subjective assessments was obtained from either a CD player of a PCM-FI digital recorder. Digitization of the music signal was achieved using a purpose built data acquisition unit, employing 16 bit stereo A to D and D to A converters. Anti-aliasing and reconstruction filtering was performed with 9th order 16 kHz roll-off active filters. To evaluate the success of this coding arrangement, coded music was compared to the original (bandlimit to 15kHz), by listening to both passages through high quality loudspeakers, placed in a room considered to be representative of a good domestic environment. The playback equipment consisted of the PCM-FI recorder, an active crossover network with attenuator, four 100 watt reference mono power amplifiers and a pair of bi-amped monitor quality loudspeakers. A minimum of audio equipment was used at all times to reduce cumulative signal degradation.

The results obtained clearly demonstrated the very high coding efficiency of sub-band ADPCM with comparison to digitally companded and ADM schemes when applied to music signals. The results show that surprisingly high quality digital audio can be represented by split band ADPCM words approaching one quarter that of linear PCM, and still remain essentially indistinguishable. The inventor believes these findings are very significant and represent a major advance in digital audio technology, having immediate implications for ISDN, broadcasting and DBS digital audio distribution.

Whilst the above has dealt with 4 bit sub-band ADPCM, for the purposes of low-bit rate music coding, auxiliary tests have shown that the performance curve for this scheme saturates at approximately 5-6 bits per Nyquist sample, rendering even the most critical music signals indistinguishable from the original. In addition to this ADPCM is known to offer bit error immunity down to 1 to $10^3$ without any form of protection or concealment - 4 or 5 orders of magnitude better than any PCM based systems. With future professional digital audio standards looking beyond 16 bits per sample as a means of improving dynamic capability. The continuing viability of PCM as a reliable and economic means of storing or transmitting high quality digital audio must be open to question.

Referring to Figure 14 a system is described which demonstrates an application of the signal coding technique using digital audio samples derived from a Compact Disc (CD) player 141. With this system, the 16 bit PCM audio data stream within the CD player is firstly compressed to 4 bits and then expanded back up to the original 16 bit PCM format, returned to the player circuitry and converted to analogue as normal. The compression/expansion (or coding) processes are performed in realtime using to separate digital signal processor (DSP) chips 142 and 143. Since both the encoding and decoding process is performed back-to-back, use of the very high quality audio material provided by the compact disc playback system allows for an accurate evaluation of the sonic properties of the coding system as a whole.

The coding apparatus was programmed into two AT & T DSP16-55nS digital signal processor chips 142, 143, which were in turn interfaced to a modified Philips CD650 compact disc player 141 (the disc is referenced 140).

The CD 650 player digital audio circuits consist of three main PCM processing chips the demodulator 144 (SAA7210 or the A-Chip), the Digital Filter 145 (SAS7220 or the B-Chip) and the Digital to Analogue Converter 146 (DAC). In order to acquire the 16 bit PCM audio data, the normal serial data path between the SAA7210 and the SAA7220 is broken and alternatively re-routed via the encoder-decoder hardware processing loop 147. On inputting each 16 bit PCM sample (sterio sampling rate = 88.2 kHz) the encoder effectively transfers coded data serially to the decoder at a quarter of this bit rate (Eg 4 bits per PCM sample). On receiving the compressed data, the decoder chip 143 expands it back to 16 bits PCM and outputs the PCM data stream to the SAA7220 filter chip 145 in a similar format to that of the demodulator 144 (SAA7210 PCM) output data stream.

Referring to Figure 15, on entering the encoding DSP chip 142 through its serial input port, the 16 bit PCM words are first applied to the sub-band filter bank algorithm 150, which divides the digital spectrum into four uniform channels or sub-bands, 0-5.5kHz, 5.5-11kHz, 11-16.5Khz and 16.5-22kHz. Each sub-band signal is then down-sampled to 11kHz giving a throughput of one word per sub-band for every four 16 bit PCM words input to the filter. Each sub-band signal is then processed through independent ADPCM algorithms which subtract a prediction (P) from each sub-band sample and quantises (Q) the difference. The quantiser bit allocation in this illustration is fixed at 8 bits for the 0-5.5kHz band, 4 bits for the 5.5-11kHz band and 2 bits each for the remaining bands. The four quantised difference signals are then multiplexed by multiplexer 15 into a single 16 bit sub-band ADPCM word (ie 8+4+2+2 bits) Since this composite word is formed for every four PCM words input to the encoder chip 142, by storing or transmitting each sub-band ADPCM word instead of the original PCM words, a four fold reduction in signal capacity is facilitated.

Each 16 bit sub-band ADPCM word is therefore output serially, through the serial output port of the processor, to the decoder DSP, chip 143. As explained in the previous paragraph, these exchanges are now at a quarter of the rate at which the 16 bit PCM words are entering the encoder chip 142.

Referring to Figure 16, on entering the decoding DSP chip 143 through its serial input port, the 16 bit ADPCM words are firstly applied to the demultiplexer algorithm 160. Once the sub-band codes have been separated, each are inverse quantised (I/Q) and reconstructed by adding back each prediction (P) subtracted at the encoding chip 142. The reconstructed sub-band signals are then up-sampled and inverse filtered back into a 44.1kHz sampled sterio PCM signal. Each PCM word is then ouptut to the Digital Filter 145 (SAA7220) via the DSP's serial output port.

While the left and right channel PCM samples are input to the encoder through a common port, each are encoded and decoded separately throughout the back-to-back coding process. The decoder and encoder algorithms 160 and 150 therefore incorporate in practice, two of the routines shown in Fig. 16 and Fig 15 respectively to process the left and right channels.

## Compact Disc Plaver - DSP16 Hardware Interfacing

Progressively detailed description of the hardware interfacing for the chips 142 and 143 is given with reference to Figs.17 and 18 respectively.

Starting at the PCM serial input of the encoder processor (Data Input DI), PCM audio data, in the I²S format (ref.l), is simultaneously clocked out of the demodulator chip 144 (SAA7210) and into the DI of the DSP encoder 142. Each encoder 16 bit, serial input is initiated on the edges of WSAB via the load cycle LDAB. In order for the processor to distinguish between left and right PCM words, a sync pulse is applied to an "active" parallel input line (PBO) in order to correspond to the acquisition of a left PCM sample. On reading both the parallel and serial ports simultaneously, the processor can correctly orientate the processing of each sample reliably.

The 16 bit sub-band ADPCM words are output from DO (Data out) of the DSP 16 serial output port. However, these are transferred at a quarter of the rate of the PCM words. However, the timing left sub-band ADPCM is such that its entry onto XDAB line corresponds to a SYAB high pulse. The right channel sub-band ADPCM

word follows 45.35μs later, but without an active pulse on SYAB.

Receiving the stereo 16 bit sub-band ADPCM word on XDAB via DI serial input, the decoder processor simultaneously outputs the reconstructed 16 bit PCM words at a rate of 88.2kHz, to the DDAB input of the SAA7220 chip via the DSP16 DO serial output. Again the output word timing of the decoding algorithm 160 is such that the left channel PCM words are aligned with a high on the sync input SYAB.

Detailed TTL timing diagrams for the serial and parallel ports of the AT & T DSP16 processor chips 142 and 143, and the PCM data formats for the Mullard SASA7210 and SAA7220 chips 144 and 145 may be found in appropriate Mullard and AT & T reference manuals. A typical word format for the serial 6 bit sub-band ADPCM data transmissions between the DSP chips 142 and 143 is shown in Fig 19 i.e. the lower band (0-5.5kHz) ADPCM occupies the first eight bits of the transmitted word, the next band (5.5-11kHz) ADPCM word occupies the next 4 bits and so forth.

While the work described here is primarily concerned with high quality music coding for ISDN, applications are to be found in other bandwidth conscious environments, eg music distribution for land and satellite-based broadcasting. Moreover the implications of high quality music coding are also very significant in the continuing development of the domestic digital audio media, in particular, sound on video, compact disk (CD), video CD and digital audio tape (DAT).

## Claims

1. A method of electrical signal coding comprising the steps of sampling the signal at repeated intervals, filtering each sample into at least two frequency sub-bands, coding the signal in each band by means of a linear prediction. technique and quantizing each sub-band with a varying number of levels according to its signal variance, characterized in that the signal frequency range is 0-24KHz and in that the energy in past inverse quantized samples is used to adjust the range for the next sample both at a receiver and a transmitter.

2. A method of electrical signal coding as claimed in claim 1, in which each sample is filtered into four sub-bands.

3. A method of electrical signal coding as claimed in claim 1 or 2, in which a block of incoming samples is delayed at the transmitter, the root mean square energy of the block is calculated and the energy value is used to scale the quantizer prior to quantizing the block of samples, and the energy sample is also transmitted to the receiver ahead of the resulting binary bit stream in order to match the inverse quantizer range to that in the transmitter.

4. Apparatus for the coding of an electrical signal comprising means for sampling (QMF) the signal at repeated intervals, means for splitting (QMF) the signal into at least two frequency sub-bands, means for coding (QMF, I/Q, P) the signal in each band by means of a linear prediction technique and quantizing each sub-band with a varying number of levels according to its signal variance, characterised in that the apparatus is capable of coding over the signal frequency range 0-24KHz and in that the energy in past inverse quantized samples is used to adjust the range for the next sample both at a receiver and a transmitter.

5. Apparatus as claimed in claim 4, in which the means for coding comprises a two band Quadrature Mirror Filter Bank(QMF) incorporating backward adaptive prediction.

6. Apparatus as claimed in claim 4, in which the means for coding comprises a four band Quadrature Mirror Filter Bank (QMF) .

7. Apparatus as claimed in claim 5 or 6, in which block adaptive predictors (P) are provided in the two sub-bands.

8. Apparatus as claimed in claim 5 or 6, in which gradient adaptive predictors (P) are provided in the two sub-bands.

## Patentansprüche

1. Ein Verfahren zur elektrischen Signal-Kodierung, das die Schritte beinhaltet, das Signal in wiederholten Intervallen abzutasten, jedes Abtastmuster in wenigstens zwei Frequenz-Subbänder zu filtern, das Signal in jedem Band mit Mitteln einer linearen Prädiktionstechnik zu kodieren, und jedes Subband mit einer veränderlichen Anzahl von Pegeln, entsprechend seiner Signalvarianz, zu quantisieren, dadurch gekennzeichnet, daß der Signalfrequenzbereich 0 - 24 kHz beträgt, und daß die Energie in vorherigen, invers quantisierten Abtastmustern benutzt wird, um den Bereich für das nächste Abtastmuster sowohl in einem Empfänger als auch in einem Sender einzustellen.

2. Ein Verfahren zur elektrischen Signal-Kodierung nach Anspruch 1, bei welchem jedes Abtastmuster in vier Subbänder gefiltert wird.

3. Ein Verfahren zur elektrischen Signal-Kodierung nach Anspruch 1 oder 2, bei welchem ein Block einlaufender Abtastmuster im Sender verzögert wird, die Wurzel aus der mittleren quadratischen Energie des Blockes berechnet wird und der Energiewert benutzt wird, um den Quantisierer vor der Quantisierung des Blockes von Abtastmustern zu skalieren, und das Energie-Abtastmuster, dem resultierenden binären Bit-Strom vorangestellt, auch zum Empfänger übertragen wird, um den Bereich des inversen Quantisierers an denjenigen im Sender anzupassen.

4. Vorrichtung zum Kodieren eines elektrischen Signals, beinhaltend Mittel zum Abtasten (QMF) des Signals in wiederholten Intervallen, Mittel zum Trennen (QMF) des Signals in wenigstens zwei Frequenz-Subbänder, Mittel zum Kodieren (QMF, I/Q, P) des Signals in jedem Band mit Mitteln einer linearen Prädiktionstechnik und zum Quantisieren jedes Subbandes mit einer veränderlichen Anzahl von Pegeln entsprechend seiner Signalvarianz, dadurch gekennzeichnet, daß die Vorrichtung geeignet ist, über den Signalfrequenzbereich von 0 - 24 kHz zu kodieren, und daß die Energie in vorherigen, invers quantisierten Abtastmustern benutzt wird, um den Bereich für das nächste Abtastmuster sowohl in einem Empfänger als auch in einem Sender einzustellen.

5. Vorrichtung nach Anspruch 4, in welcher das Mittel zu Kodieren eine Zwei-Band-Quadratur-Spiegel-Filter-Bank (QMF) mit rückwärts-anpaßbarer Prädiktion beinhaltet.

6. Vorrichtung nach Anspruch 4, in welcher das Mittel zum Kodieren eine Vier-Band-Quadratur-Spiegel-Filter-Bank (QMF) beinhaltet.

7. Vorrichtung nach Anspruch 5 oder 6, in welcher block-anpaßbare Prädiktoren (P) in den zwei Subbändern vorgesehen sind.

8. Vorrichtung nach Anspruch 5 oder 6, in welcher gradienten-anpaßbare Prädiktoren (P) in den zwei Subbändern vorgesehen sind.

## Revendications

1. Procédé de codage d'un signal électrique comprenant les étapes d'échantillonnage du signal à intervalles répétés, de filtrage de chaque échantillon en au moins deux sous-bandes de fréquences, de codage du signal dans chaque bande par une technique de prédiction linéaire et de quantification de chaque sous-bande avec un nombre de niveaux variable en fonction de la variance de son signal, caractérisé par le fait que la plage de fréquences du signal s'étend de 0 à 24 kHz et que l'on utilise l'énergie des échantillons quantifiés en inverse pour ajuster la plage de l'échantillon suivant, à la fois dans un récepteur et dans un émetteur.

2. Procédé de codage d'un signal électrique selon la revendication 1, dans lequel chaque échantillon est filtré en quatre sous-bandes.

3. Procédé de codage d'un signal électrique selon l'une des revendications 1 et 2, dans lequel on retarde, dans l'émetteur, un bloc d'échantillons entrants, on calcule l'énergie efficace du bloc et on utilise la valeur de l'énergie pour mettre à l'échelle le quantificateur avant de quantifier le bloc d'échantillons, et on transmet aussi l'énergie d'échantilllon au récepteur en tête du flux résultant de bits binaires pour accorder la plage du quantificateur inverse sur celle de l'émetteur.

4. Appareil de codage d'un signal électrique, comprenant des moyens (FMQ) d'échantillonnage du signal à intervalles répétés, des moyens (QMF) de division du signal en au moins deux sous-bandes de fréquences, des moyens (FMQ, I/Q,P) de codage du signal dans chaque bande par une technique de prédiction linéaire et de quantification de chaque sous-bande avec un nombre variable de niveaux suivant la variance de son signal, caractérisé par le fait que l'appareil est agencé pour coder sur la plage de fréquences du signal s'étendant de 0 à 24 kHz et que l'énergie d'échantillons antérieurs quantifiés en inverse sert à ajuster la plage de l'échantillon suivant, à la fois dans un émetteur et dans un récepteur.

5. Appareil selon la revendication 4, dans lequel les moyens de codage comprennent un ensemble à deux bandes de filtres miroirs en quadrature (FMQ) comportant une prédiction adaptative vers l'arrière.

6. Appareil selon la revendication 4, dans lequel les moyens de codage comportent un ensemble à quatre bandes de filtres miroirs en quadrature (FMQ).

7. Appareil selon l'une des revendications 5 et 6, dans lequel il est prévu des prédicteurs adaptatifs de bloc (P) dans les deux sous-bandes.

8. Appareil selon l'une des revendications 5 et 6, dans lequel il est prévu des prédicteurs adaptatifs de gradient (P) dans les deux sous-bandes.

_Fig. 1_

_Fig. 2_

EP 0 398 973 B1

_Fig.3_

_Fig.4_

$$P(n) = \sum_{i=1}^{\substack{Predictor \\ order}} a_i * r(n-i) \; — \; — \; — \; — \; — \; \underline{EQN.1}$$

$$(a_i = Predictor\ Coeffs)$$

12

EP 0 398 973 B1

2-bit PCM

Resulting noise generated by both systems

2-bit DPCM

Fig. 5

Fig.6

Fig.7

Fig.8

Fig.9

_Fig. 13b_

_Fig. 10_

6 bits   2 bits   5 bits   3 bits   4 bits   4 bits

TIME

FIG.11

_Fig.12a_

Encoder · Decoder

**Audio in** → 24 tap QMF tree

3 Bits: Q, Δ, 1/Q, P(PZ) → +/−
5 Bits: Q, Δ, 1/Q, P(PZ) → +/−

M U X → 128 Kbit/s → D E M U X

3 Bits: 1/Q, Δ, P(PZ) → +/+
5 Bits: 1/Q, Δ, P(PZ) → +/+

24 tap QMF tree → **Audio out**

_Fig.12b_

Audio input (0–16 KHZ) → 24 tap QMF → Upper band (16–8 KHZ), Lower band (0–8 KHZ)

*Fig.13a*

*Fig.13b*

Decoder

Encoder

64 tap QMF tree

Audio out

Audio in

128 kBit/S

DEMUX

MUX

ABA

P Q 1/Q Δ

Fig.14

EP 0 398 973 B1

**Fig. 15**

16·5 - 22 KHZ
FS = 11KHZ

11 - 16·5KHZ
FS = 11KHZ

16 Bit
PCM words

FS = 44·1KHZ

5·5 - 11KHZ
FS = 11KHZ

0 - 5·5KHZ
FS = 11KHZ

150

Subband Filter Bank

2 Bits
2 Bits
4 Bits
8 Bits

M U X

16 band
Subband
ADPCM words

FS = 11KHZ

151

**Fig. 16**

16 Bit
Subband
ADPCM
words
FS - 11KHZ

D E M U X

160

2 Bits
2 Bits
4 Bits
8 Bits

16·5 - 22KHZ
FS = 11KHZ

11 - 16·5KHZ
FS = 11KHZ

5·5 - 11 KHZ
FS = 11KHZ

0 - 5·5 KHZ
FS = 11 KHZ

Subband Filter Bank

16 Bit
PCM words

FS = 44·1KHZ

Fig.17

EP 0 398 973 B1

Fig.18

++ Parallel input in Active Mode
* Processor Interrupt driven by Output Buffer Empty Signal

EP 0 398 973 B1

*Fig.19*

EP 0 398 973 B1